# FASCICULE DE BREVET EUROPEEN

(11) **EP 1 008 256 B1**
(45) Date de publication et mention de la délivrance du brevet: **30.07.2003**
(21) Numéro de dépôt: 97942090.8
(22) Date de dépôt: 25.09.1997
(51) Int. Cl.: H04M 1/274, G06F 1/00

(54) **PROCEDE ET SYSTEME POUR SECURISER LES PRESTATIONS DE SERVICE DIFFUSEES SUR UN RESEAU INFORMATIQUE DU TYPE INTERNET**
VERFAHREN UND EINRICHTUNG ZUR SICHERUNG DER DIENSTLEISTUNGEN WELCHE ÜBER EIN COMPUTERNETZ VOM INTERNET-TYP ANGEBOTEN WERDEN
METHOD AND SYSTEM FOR ENSURING THE SECURITY OF SERVICE SUPPLIES BROADCAST ON A COMPUTER NETWORK OF THE INTERNET TYPE

(30) Priorité: 25.09.1996 FR 9611912
(43) Date de publication de la demande: 14.06.2000
(73) Titulaire: FINTEL, 75008 Paris (FR)
(72) Inventeur: ROSSET, Franck, F-75011 Paris (FR); GAYET, Alain, F-92400 Courbevoie (FR); MOULIN, Jean, F-92210 Draveil (FR)
(74) Mandataire: Vidon, Patrice
(86) Numéro de dépôt international: FR9701685
(87) Numéro de publication internationale: WO98013984

(56) Documents cités:
- EP-A- 0 374 012
- EP-A- 0 459 781
- CA-A- 2 085 775
- GB-A- 2 274 523

## Description

Le domaine de l'invention est celui de la transmission de données sur un réseau informatique du type Internet.

Plus précisément, l'invention concerne un procédé et un système permettant aux utilisateurs d'un réseau informatique du type Internet disposant de terminaux multimédia comportant un microphone et connectés à un réseau informatique du type Internet, situés à distance d'un prestataire de services, d'accéder de manière sûre et rapide, aux services que ce prestataire de services offre à ses abonnés au moyen d'un réseau informatique du type Internet.

Le problème posé est d'empêcher un utilisateur mal intentionné d'accéder aux services offerts par les prestataires de services sans y être autorisé, sans acquitter les droits correspondants ou en prétendant qu'il n'a pas demandé les services qui lui sont débités.

Pour résoudre ce problème, il a été proposé d'utiliser des clés d'accès que l'utilisateur génère au moyen de son terminal multimédia ou au moyen d'équipements périphériques. Ces solutions, outre leur coût, sont peu pratiques et longues à mettre en oeuvre. En fait, le problème posé ne peut être effectivement résolu que si on sait résoudre simultanément un autre problème : concevoir un procédé et un système commode d'utilisation, rapide à mettre en oeuvre et économique. En effet, dès lors que l'on s'adresse à un large public, la facilité d'utilisation et les gains de temps deviennent des problèmes majeurs qui ne peuvent pas être écartés.

Il a été proposé ( document WO 96 04741 au nom de Andrew MARK) d'utiliser une carte émettant des signaux acoustiques, cryptés, de type DTMF, pour composer des numéros téléphoniques. Ainsi, le porteur d'une telle carte, en accouplant celle-ci au microphone du combiné téléphonique, transfert automatiquement ses identifiants.

Comme ces identifiants sont chiffrés, on peut penser qu'un tiers ne sera pas en mesure d'en comprendre le contenu.

La solution de A. MARK, concerne donc un tout autre secteur technique que celui de la sécurité des données transmises sur un réseau informatique du type Internet. Au surplus, l'enregistrement des signaux émis par la carte A. MARK reste possible et un fraudeur muni d'un tel enregistrement peut se substituer au bénéficiaire de la carte. La carte A. MARK ne permettrait donc pas d'empêcher un utilisateur mal intentionné d'accéder, sans y être autorisé, aux services offerts sur les réseaux informatiques du type Internet.

La demande de brevet : DE,A,43 25 459 déposée au nom de Raymund H. EISELE décrit une calculette émettant des signaux acoustiques d'identification, variant à chaque opération. Un enregistrement de tels signaux acoustiques ne présenterait donc aucun intérêt pour un fraudeur. Toutefois, ses dimensions importantes, sa faible maniabilité, son mode d'emploi malaisé et son prix de revient élevé ne permettent pas d'atteindre les objectifs visés par la présente invention. A savoir : concevoir un procédé et un système commode d'utilisation, rapide à mettre en oeuvre et économique. En effet, un utilisateur n'acceptera de faire appel aux services offerts par un prestataire de services sur un réseau informatique du type Internet que si l'accès à ce dernier est facile et rapide.

Les objectifs visés par la présente invention sont atteints et les problèmes que posent les techniques selon l'art antérieur sont résolus, selon l'invention, à l'aide du procédé suivant :
- le prestataire de services met à la disposition de chacun des utilisateurs d'un réseau informatique du type Internet qui se sont abonnés à ses services, une carte, au format carte de crédit, personnalisée par des identifiants spécifiques pour chaque abonné et pour chaque carte ; ladite carte, au format carte de crédit, émet de brefs signaux acoustiques d'identification, de type DTMF, cryptés au moins en partie, variant à chaque opération, lorsqu'elle est actionnée par l'utilisateur d'un réseau informatique du type Internet,
- les dits signaux acoustiques d'identification sont reçus par le microphone du terminal multimédia et transmis via le réseau informatique du type Internet au service informatique du prestataire de services, notamment après réception par le terminal multimédia d'un ordre de transmission émis par le service informatique,
- les signaux transmis et les données d'identification du client et de la carte détenus par le service informatique sont traités et comparés électroniquement par le service informatique du prestataire de services,
   de sorte qu'en cas de coïncidence, l'abonné est immédiatement mis en communication avec le serveur informatique du prestataire de services.

Ainsi, grâce à ce procédé, le prestataire de services a l'assurance que l'appelant dispose bien d'une carte authentique et non d'un leurre informatique. Il a pu également identifier le titulaire de la carte comme étant une personne habilitée à utiliser les services qu'il offre. Par ailleurs, les fraudeurs n'ont pas la possibilité de dérober les données d'identification puisque celles-ci sont transmises automatiquement sous une forme cryptée. En outre, l'enregistrement, sous quelque forme que ce soit, des signaux acoustiques ne sera d'aucune utilité à un fraudeur pour se faire identifier par les services informatiques du prestataire de services. En effet, les signaux acoustiques d'identification varient à chaque opération. C'est-à-dire chaque fois que la carte est actionnée.

De préférence ladite carte :
- décompte en outre le nombre de fois C(p,n) où elle est actionnée,
- émet des signaux acoustiques représentatifs du nombre de fois C(p,n) où elle a été actionnée,
- crypte les signaux acoustiques en fonction du nombre de fois C(p,n) où elle a été actionnée.

De préférence également, lesdits moyens informatiques pour traiter et comparer électroniquement les signaux transmis et les données d'identification du client et de la carte détenues par le service informatique du prestataire de service :
- mémorisent le nombre de fois C(p,m) où la carte a été actionnée lors de la dernière opération validée,
- comparent le nombre de fois C(p,n) où la carte a été actionnée, lors de l'opération en cours, avec le nombre de fois mémorisé C(p,m),
- rejettent l'opération en cours si C(p,n) est inférieur ou égal à C(p,m) et poursuivent la vérification de l'opération en cours si C(p,n) est supérieur à C(p,m),
- recalculent les signaux électroniques S'(p,n) en fonction des données d'identification et du nombre de fois C(p,n) où la carte a été actionnée, lors de l'opération en cours, puis les comparent aux signaux électroniques S(p,n) transmis. De sorte qu'en cas de coïncidence, l'utilisateur abonné peut être immédiatement mis en communication avec les services du prestataire de service.

On notera que l'utilisation d'un microcircuit pour crypter, au moyen d'un compteur, des codes d'identification échangés entre un émetteur et un récepteur a été décrite dans la demande de brevet : EP 0 459 781 A1 déposée au nom de **NANOTEK LIMITED.**

Afin d'augmenter la sécurité du procédé, dans une variante de réalisation, le procédé comprend en outre l'étape suivante : l'abonné émet, au moyen d'un clavier associé au terminal multimédia et/ou à la carte, un code confidentiel ; après transmission au service informatique du prestataire de services, via le réseau informatique de communication, ce code confidentiel est traité et comparé au code confidentiel personnel de l'abonné détenu par le service informatique du prestataire.

Ainsi, le prestataire de services à l'assurance que l'appelant est bien la personne habilitée à entrer en relation avec ses services. Une carte volée ne peut pas être utilisée par le voleur faute de connaître le code confidentiel.

Dans une autre variante de réalisation, afin également de renforcer la sécurité du procédé et d'éviter que l'abonné ne puisse contester la demande qu'il a adressée au prestataire de service, le procédé comprend en outre les étapes suivantes :
- les ordres donnés par l'abonné au prestataire de service sont validés par l'abonné en actionnant la carte pour qu'elle émette un signal acoustique crypté de validation,
- le dit signal de validation est enregistré par le service informatique du prestataire de service, traité et décrypté, et de préférence un accusé de réception est adressé à l'abonné.

Grâce à ce procédé, l'abonné a validé, par une signature électronique, l'ordre qu'il a donné au prestataire de service.

Au moins trois variantes de réalisation permettent de transmettre les signaux acoustiques d'identification au service informatique du prestataire de service.

Selon la première variante, le procédé selon l'invention comprend en outre les étapes suivantes :
- le service informatique du prestataire de service télécharge dans le terminal multimédia un logiciel de conversion,
- le logiciel de conversion convertit, sous la forme d'une séquence de bits, les signaux acoustiques d'identification reçus par le microphone du terminal multimédia,
- la séquence de bits est transmise, via le réseau informatique du type Internet, au service informatique du prestataire de service, notamment après réception d'un ordre de transmission émis par le service informatique.

De sorte que les signaux provenant du terminal multimédia se présentent sous la forme d'une séquence de bits.

Selon la deuxième variante de réalisation, les signaux acoustiques d'identification reçus par le microphone du terminal multimédia sont transmis via le réseau informatique du type Internet au service informatique du prestataire de service, notamment après réception par le terminal multimédia d'un ordre de transmission émis par le service informatique. Dans le cas de cette variante, les signaux provenant du terminal multimédia sont transmis sous la forme d'un fichier son. Le traitement du fichier son et sa transformation en une séquence de bits (éléments binaires) sont effectués par les services informatiques du prestataire de service.

Selon la troisième variante le procédé comprend en outre les étapes suivantes :
- le prestataire de service met à la disposition de chacun des utilisateurs du réseau informatique du type Internet qui se sont abonnés à ses services, un logiciel de conversion destiné à être mis en oeuvre dans le terminal multimédia,
- les dits signaux acoustiques d'identification reçus par le microphone du terminal multimédia sont convertis en séquence de bits, avant d'être transmis via le réseau informatique du type Internet au service informatique du prestataire de service.

L'invention concerne également un système permettant aux utilisateurs du réseau informatique du type Internet disposant de terminaux multimédia comportant un microphone et connectés à un réseau informatique du type Internet, situés à distance d'un prestataire de service, d'accéder de manière sûre et rapide aux services que le dit prestataire de service offre aux utilisateurs. Ce système a pour caractéristique de comprendre les moyens de mise en oeuvre du procédé ci-dessus défini et de ses variantes de réalisation.

Plus particulièrement :
- Le système selon l'invention comprend une carte, au format carte de crédit, personnalisée par des identifiants spécifiques pour chaque carte et pour chaque abonné, mise à la disposition de ceux-ci. La dite carte comporte:
   * des moyens d'émission de brefs signaux d'identification, de type DTMF, actionnés par l'abonné au moyen d'un élément accessible de l'extérieur de la carte,
   * des moyens de cryptage permettant de crypter au moins en partie et de varier les signaux acoustiques chaque fois que la carte est actionnée.
- Le système selon l'invention comprend des moyens de transmission des signaux acoustiques, situés dans les terminaux multimédia, transmettant à distance sous la forme de signaux électroniques, via le réseau informatique du type Internet, les dits signaux acoustiques.
- Le système selon l'invention comprend des moyens informatiques, dépendants des services informatiques du prestataire de service, connectés au réseau informatique du type Internet et recevant les signaux électroniques provenant des terminaux multimédia. Les moyens informatiques comprennent :
   * une base de données contenant les références des cartes et des abonnés et leurs données d'identification,
   * des moyens de traitement et des moyens de comparaison des signaux électroniques et des données d'identification contenues dans la base de données.

De sorte qu'en cas de coïncidence les services du prestataire de service sont immédiatement accessibles aux abonnés.

Ainsi, grâce à ce système, le prestataire de service a l'assurance que l'appelant dispose bien d'une carte authentique et non d'un leurre informatique. II a pu également identifier le titulaire de la carte comme étant une personne habilitée à utiliser les services qu'il offre. Par ailleurs, les fraudeurs n'ont pas la possibilité de dérober les données d'identification puisque celles-ci sont transmises automatiquement sous une forme cryptée. En outre, l'enregistrement, sous quelque forme que ce soit, des signaux acoustiques ne sera d'aucune utilité à un fraudeur pour se faire identifier par les services informatiques du prestataire de service. En effet, les signaux acoustiques d'identification varient à chaque opération. C'est-à-dire chaque fois que la carte est actionnée.

De préférence la dite carte comporte en outre :
- un compteur incrémental interconnecté aux moyens d'émission et aux moyens de cryptage s'incrémentant d'au moins une unité chaque fois que la carte est actionnée.

De sorte que l'état du compteur incrémental est émis à destination des moyens informatiques et que les signaux acoustiques sont cryptés en fonction de l'état du compteur incrémental.

De préférence également les dits moyens informatiques comportent en outre :
- des moyens de mémorisation de l'état C(p,m) du compteur incrémental lors de la dernière opération validée,
- des moyens de comparaison de l'état C(p,n) du compteur incrémental émis lors de l'opération en cours avec l'état C(p,m) du compteur incrémental mémorisé.

De sorte que la vérification de l'opération en cours est rejetée si C(p,n) est inférieur ou égal à C(p,m) et est poursuivie si C(p,n) est strictement supérieur à C(p,m).

De préférence également les dits moyens de traitement et les dits moyens de comparaison des signaux électroniques et des données d'identification contenues dans la base de données comportent des moyens permettant de recalculer les signaux électroniques en fonction de l'état C(p,n) du compteur incrémental et des données d'identification puis de les comparer aux signaux électroniques transmis. De sorte qu'en cas de coïncidence, l'abonné peut être immédiatement mis en communication avec les services du prestataire de service.

Afin d'augmenter la sécurité du système, dans une variante de réalisation, le système comprend en outre des seconds moyens de comparaison d'un code confidentiel personnel à l'abonné contenu dans la base de données, à un code confidentiel émis par l'abonné. Ce code est émis au moyen d'un clavier associé au terminal multimédia et/ou à la carte et transmis aux moyens informatiques du prestataire de service, par le réseau informatique de communication.

Ainsi, le prestataire de service a l'assurance que l'appelant est bien la personne habilitée à entrer en relation avec ses services. Une carte volée ne peut pas être utilisée par le voleur faute de connaître le code confidentiel.

Dans une autre variante de réalisation, afin également de renforcer la sécurité du système et d'éviter que l'abonné ne puisse contester la demande qu'il a adressée au prestataire de service, le système comporte :
- des moyens logiciels de validation des ordres donnés par l'abonné au prestataire de service, après détection d'un signal acoustique crypté émis par la carte actionnée par l'abonné,
- des moyens logiciels d'édition d'un accusé de réception des ordres donnés destiné à être adressé à l'abonné.

Grâce à ce système, l'abonné a validé, par une signature électronique, l'ordre qu'il a donné au prestataire de service.

Au moins trois variantes de réalisation permettent de transmettre les signaux acoustiques d'identification au service informatique du prestataire de service.

Selon la première variante les moyens informatiques, dépendants des services informatiques du prestataire de service, comprennent :
* des moyens de téléchargement d'un logiciel de conversion dans le terminal multimédia, le dit logiciel de conversion convertit, sous la forme d'une séquence de bits, les signaux acoustiques d'identification reçus par le microphone du terminal multimédia,
* des moyens d'émission d'un ordre de transmission de la séquence de bits, du terminal multimédia vers les services informatiques du prestataire de service, via le réseau informatique du type Internet.

De sorte que les signaux provenant du terminal multimédia se présentent sous la forme d'une séquence de bits.

Selon la deuxième variante de réalisation, le terminal multimédia comprend des moyens de transmission des signaux acoustiques d'identification reçus par le microphone du terminal multimédia, sous la forme d'un fichier son. Ce fichier son est transmis, via le réseau informatique du type Internet vers le service informatique du prestataire de service, notamment après réception d'un signal émis par les services informatiques du prestataire de service. Dans le cas de cette variante, le traitement du fichier son et sa transformation en une séquence de bits sont effectués par les services informatiques du prestataire de service.

Selon la troisième variante, le système comprend un logiciel de conversion destiné à être mis en oeuvre dans le terminal multimédia. Le logiciel de conversion transforme les signaux acoustiques, reçus et transmis par le microphone du terminal multimédia, en des séquences de bits transmissibles à distance au moyen du réseau informatique du type Internet.

D'autres caractéristiques et avantages de l'invention apparaîtront à la lecture de la description de variantes de réalisation de l'invention, données à titre d'exemple indicatif et non limitatif. Les Figures représentent :
- figure 1 : une vue schématique en perspective du système et du procédé selon l'invention,
- figure 2 : la carte sous la forme de bloc diagramme,
- figure 3 : l'algorithme de vérification de l'authenticité du signal transmis.
- figure 4 : sous la forme de bloc diagramme, la première variante de réalisation, caractérisée en ce que les services informatiques du prestataire de service télécharge un logiciel de conversion dans le terminal multimédia,
- figure 5 : sous la forme de bloc diagramme, la dite deuxième variante de réalisation, caractérisée en ce que les services informatiques du prestataire de service reçoivent un fichier son transmis par le terminal multimédia,
- figure 6 présente, sous la forme de bloc diagramme, la dite troisième variante de réalisation, caractérisée en ce que les services informatiques du prestataire de service reçoivent des bits générés par le terminal multimédia au moyen d'un logiciel spécifique.

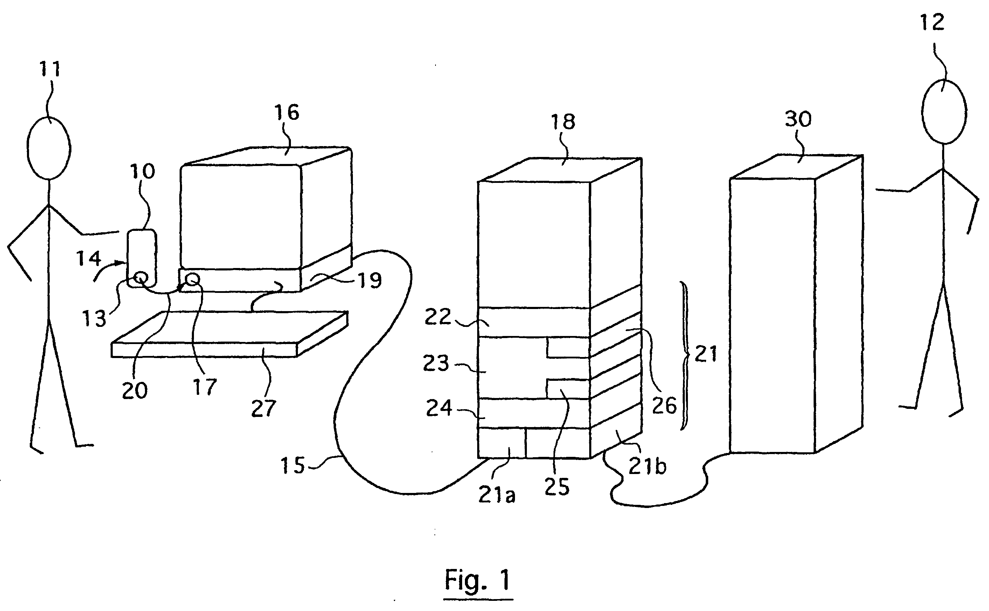

On présente maintenant en relation avec la figure 1 le système et le procédé selon l'invention. Le système et le procédé selon l'invention permettent aux utilisateurs 11 du réseau informatique du type Internet 15 disposant de terminaux multimédia 16 comportant un microphone 17, d'accéder de manière sûre et rapide, aux services 30 que le prestataire de service 12 offre aux utilisateurs 11. Le terminal multimédia 16, situé à distance des services informatiques 18 du prestataire de service 12, est connecté au réseau informatique du type Internet 15.

Le système comprend une carte 10, au format carte de crédit, personnalisée par des identifiants spécifiques pour chaque carte et pour chaque abonné 11. Cette carte est mise à la disposition des utilisateurs abonnés 11 par le prestataire de service 12 et ses services 40. La carte 10 comporte des moyens d'émission, notamment un haut parleur 13 émettant de brefs signaux acoustiques d'identification 20, de type DTMF. Ces signaux sont émis lorsque les moyens d'émission 13 et les organes qui les contrôlent-sont actionnés par le client au moyen d'un bouton 14 accessible de l'extérieur de la carte (non visible sur la figure 1 car situé sur l'autre côté de la carte). Ces moyens d'émission 13 sont excités par un générateur de signaux DTMF 99, contrôlé par un microprocesseur 104 alimenté par une pile 106 et piloté par un résonateur 107. Le microprocesseur 104 contenu dans la carte comporte des moyens de cryptage 103 permettant de crypter, au moins en partie, les signaux acoustiques 20, comportant un algorithme de cryptage 108 et des identifiants 109 spécifiques pour chaque carte 10 et pour chaque abonné 11, notamment la clé secrète 250 utilisée par algorithme de cryptage 108.

Les signaux acoustiques 20 sont reçus par le microphone 17 du combiné téléphonique. contre lequel le client accole la carte 10. Le système comprend également des moyens de transmission 19 des signaux acoustiques 20, situés dans le terminal multimédia 16. Ces moyens de transmission 19 transmettent à distance les signaux acoustiques, après traitement et conversion en signaux électroniques, via le réseau informatique du type Internet 15.

Le système comprend également des moyens informatiques 21, dépendants des services informatiques 18 du prestataire de service, connectés au réseau informatique du type Internet 15 et recevant les signaux provenant des terminaux multimédia 16.

Les moyens informatiques 21 comprennent :
* des moyens pour actionner 22 les moyens de transmission 19 des terminaux multimédia 16,
* une base de données 23 contenant les références des cartes et des abonnés et leurs données d'identification,
* des moyens de traitement 24 et des moyens de comparaison 25 des signaux électroniques et des données d'identification contenues dans la base de données 23,
* des données d'identification contenues dans la base de données 23 et des données caractéristiques des abonnés et des cartes.

De sorte qu'en cas de coïncidence les services 30 du prestataire de service 12 sont immédiatement accessibles aux abonnés.

Le microprocesseur 104 et les moyens de cryptage 103 sont conçus de telle sorte que le signal acoustique 20 varie à chaque opération. En effet, crypter un code d'identification c'est le transformer en une suite d'informations, incompréhensibles pour tout un chacun, et que seul le titulaire de la clef de cryptage, pourra décrypter. Mais cela n'empêche absolument pas la copie du code d'identification crypté, soit au cours de sa transmission acoustique (magnétophone), soit par piratage de la ligne téléphonique. Cette copie, utilisée indûment par un fraudeur, sera traitée par le système récepteur comme ayant toutes les caractéristiques de l'original, puis interprétée afin de vérifier les identifiants de la carte.

Le problème posé est donc le suivant : comment rendre impossible toute tentative de reproduction ? II sera ci-après décrit différentes variantes de réalisation du moyen général qui permet de faire la distinction entre l'original et la copie, lors de l'analyse du signal crypté reçu par les moyens informatiques 21, en insérant un élément distinctif dans le signal 20 du type DTMF émis par la carte 10.

L'une de variantes consiste à utiliser une fonction dite d'horodatage (par exemple, ainsi qu'elle a été décrite dans le brevet US n° 4 998 279). Cette fonction d'horodatage exploite le paramètre "temps" qui évolue en permanence. La "copie" se trouve ainsi en retard quand elle est émise. Une telle solution nécessite une synchronisation entre les moyens d'émission 13 et les moyens informatiques 21. Pour cela tous les deux doivent disposer d'une "base de temps" et d'un "étalon de fréquence". Ces deux bases de temps ont leur précision propre et leur dérive propre. II en résulte qu'elles se désynchronisent lentement, mais progressivement. Pour remédier à cette difficulté technique, une certaine dérive est tolérée entre les bases de temps des moyens d'émission 13 et des moyens informatiques 21. Plus cette dérive est importante, plus l'incertitude augmente sur la "validité" de l'information reçue et plus augmente le risque de fraude. Ainsi si une dérive de une minute est tolérée, toute copie illicite de l'émission du signal crypté, et réutilisée frauduleusement dans les 30 secondes qui suivent, sera perçue comme valide par le système d'analyse des moyens informatiques 21.

Une autre variante consiste à utiliser des listes incrémentales (par exemple, ainsi qu'elle a été décrite dans le brevet US n° 4 928 098). Le dispositif d'émission et celui de réception possèdent la liste ordonnée des cryptages successifs du code d'identification ou bien disposent des algorithmes permettant de les établir au fur et à mesure. A un instant donné les moyens informatiques 21 sont en attente du résultat crypté C(n). S'ils reçoivent effectivement le message C(n), il valide l'opération. Mais les moyens informatiques 21 peuvent recevoir un message différent, en effet l'utilisateur de la carte peut avoir actionnée plusieurs fois les moyens d'émission 13 de celle-ci, par jeu, par maladresse, de sorte que la carte est dans la situation d'émettre le résultat crypté C(n+p) lors de sa prochaine utilisation avec les moyens informatiques 21. Si les moyens informatiques 21 reçoivent un message différent, ils cherchent en avant, dans la liste de résultats cryptés successifs, s'il existe un message C(n+p) identique à celui reçu. Pour lever l'ambiguïté "est-ce un message authentique émis par l'émetteur ?" ou "est-ce un message frauduleux ?", la solution consiste à demander ou à attendre l'émission du message suivant. Si celui-ci est alors identique à C(n+p+1), le système valide alors le message et se place dans l'attente de la prochaine émission, dans l'état C(n+p+2), Si celui-ci est différent, le message n'est pas validé et le système d'analyse reste en attente du message C(n). Une telle variante de réalisation n'est pas très ergonomique puisqu'elle oblige le titulaire de la carte à actionner plusieurs fois celle-ci.

Selon une variante de réalisation préférentielle, pour distinguer le signal original de sa copie, le microprocesseur 104 embarqué dans la carte 10 comporte un compteur incrémental 105. A chaque usage de la carte, le compteur incrémental 105 s'incrémente d'une ou de plusieurs unités. Bien évidemment, telle une roue à cliquet, celui-ci ne peut revenir en arrière, il ne peut qu'avancer à chaque usage.

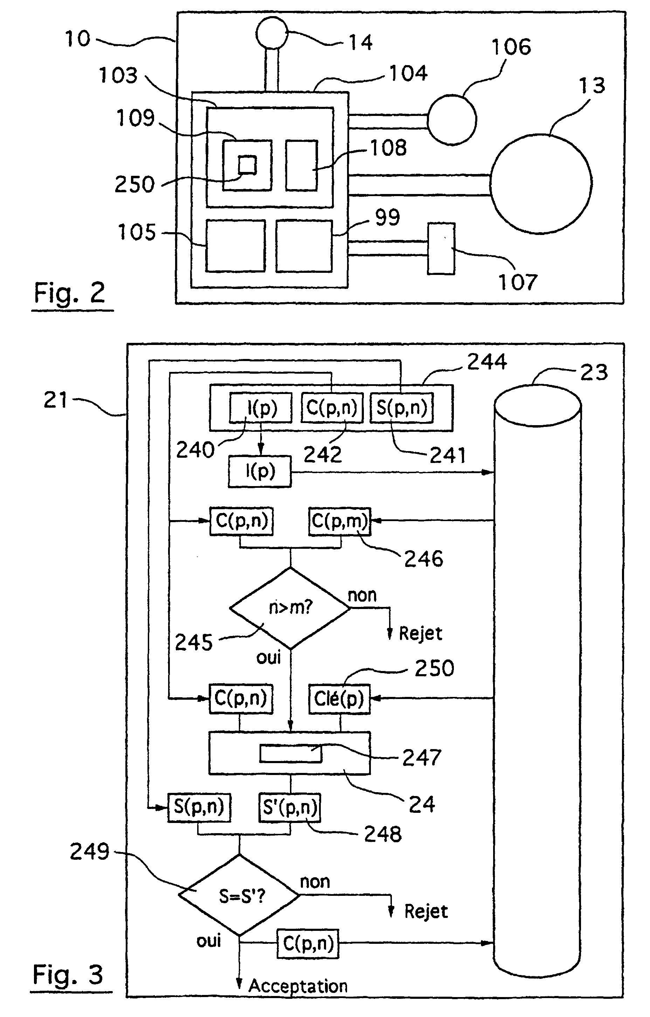

Dans le cas de cette variante de réalisation, l'état C(p,n) 242 du compteur 105 entre dans le calcul du message crypté 244 émis par les moyens d'émission 13. La partie codée S(p,n) 241 est calculée par l'algorithme 108 (dont l'algorithme équivalent 247 est mémorisé dans les moyens informatiques 21) au moyen de la clé secrète 250 spécifique à chaque carte et de l'état C(p,n) 242 du compteur 105. La carte 10 émet, en plus du numéro d'identification I(p) 240 de la carte et du code d'identification crypté S(p,n) 241, l'état C(p,n) 242 de son compteur incrémental 105 à chaque émission. Les moyens informatiques 21 mémorisent, dans la base de données 23, l'état C(p,n) 242 du compteur incrémental 105 lors de la dernière opération validée. Ainsi, à chaque réception de message 244, les moyens de comparaison 25 des moyens informatiques 21 peuvent comparer 245 l'information reçue relative à l'état C(p,n) 242 du compteur 105, à la précédente information reçue C(p,m) 246 et gardée en mémoire 23.
a) - Si l'état C(p,n) 242 du compteur 105 (fig. 2) exprimé dans le message 244 est strictement supérieur (n > m) à celui C(p,m) 246 précédemment reçu, alors le message 244 est accepté et l'analyse se poursuit.
b)- Si l'état C(p,n) 242 du compteur 105 exprimé dans le message 244 est inférieur ou égal (n ≤ m) à celui C(p,m) 246 précédemment reçu, alors le message est refusé. Le message reçu ne peut être qu'une copie antérieurement effectuée ou un leurre informatique.

Si les conditions définies au point a) ci-dessus sont réunies, les moyens informatiques 21 permettent de lire la partie fixe I(p) 240 et de rechercher dans leur propre base de données 23, 230 la clé secrète correspondante de la carte. Les moyens de calcul des moyens de traitement 24 peuvent alors au moyen l'algorithme 247, de l'état du compteur C(p,n) 242 et de la clé secrète Clé(p) 250, procéder au calcul du code crypté attendu par les moyens informatiques 21. Le code crypté S'(p,n) 248 ainsi calculé est comparé 249 à celui effectivement reçu S(p,n) 241, par les moyens de comparaison 25. Ce procédé et ces moyens permettent donc de valider ou d'invalider le message 244, sans qu'il soit nécessaire à l'utilisateur de la carte d'actionner plusieurs fois celle-ci, comme cela est le cas dans la variante de réalisation ci-dessus décrite.

L'existence au sein de la carte 10 d'un compteur incrémental 105 permet, sans coût supplémentaire, de fixer, au moment de la programmation individuelle de la carte, le nombre maximum de fois où la carte peut être utilisée. Une fois ce maximum atteint, celle-ci n'émet plus de message cohérent et est donc refusée par les moyens informatiques 21.

La trame 244 émise contient, pour une carte donnée (p),
- une partie fixe I(p) 240 (le numéro d'identification de la carte),
- une partie variable incrémentale C(p,n) 242 (l'état du compteur),
- une partie variable S(p,n) 241 apparemment aléatoire (le résultat d'un algorithme de cryptage 108 sur la clé secrète 250 propre à cette carte (p))

La trame émise
- est toujours différente d'une carte à l'autre,
- est, pour une carte donnée, toujours différente à chaque émission.

Les moyens informatiques 21 permettent, pour une carte donnée (p), de:
- lire la partie fixe I(p) 240 (le numéro d'identification de la carte),
- rechercher dans leur propre base de données 23 la clé secrète 250 de cette carte et le dernier enregistrement reçu de l'état C(p,m) 246 du compteur 105 de cette carte,
- rejeter cette trame 244 si l'état du compteur C(p,n) 242 de l'opération en cours est inférieur ou égal à celui C(p,m) 246 précédemment reçu et de poursuivre la vérification de l'opération en cours si l'état C(p,n) 242 est strictement supérieur à celui C(p,m) 246 précédemment reçu,
- de "décrypter" le message 244 reçu et d'en valider le contenu, en le recalculant au moyen de l'algorithme de cryptage 247, de la clé spécifique 250 de cette carte et de l'état du compteur C(p,n) 242, puis en comparant le résultat de ce calcul au message reçu.

Ainsi, grâce à cette combinaison de moyens il est possible d'émettre, au moyen d'une carte ayant le format d'une carte de crédit, des fréquences acoustiques de type DTMF d'identification, recevables par le microphone d'un équipement relié au réseau téléphonique, et d'avoir la certitude de l'authenticité de la carte appelante et d'écarter ainsi tous les fraudeurs utilisant tout enregistrement sonore ou informatique ou tout leurre informatique.

Afin d'augmenter la sécurité du système, dans la variante de réalisation représentée sur la figure 1, le système comprend en outre des seconds moyens de comparaison 26. Ces moyens de comparaison permettent de comparer un code confidentiel personnel à l'abonné contenu dans la base de données avec le code confidentiel émis par l'abonné. Ce code est émis au moyen d'un clavier 27 associé au terminal multimédia 16 et/ou à la carte 10 et transmis aux moyens informatiques du prestataire de service, par le réseau informatique de communication 15.

Ainsi, le prestataire de service a l'assurance que l'appelant 11 est bien la personne habilitée à entrer en relation avec ses services. Une carte volée ne peut pas être utilisée par le voleur faute de connaître le code confidentiel.

Afin également de renforcer la sécurité du système et d'éviter que l'abonné ne puisse contester la demande qu' il a adressée au prestataire de service, les moyens informatiques 21 (dans la variante de réalisation représentée sur la figure 1) comprennent :
- des moyens logiciels de validation 21a des ordres donnés par l'abonné au prestataire de service, après détection d'un signal acoustique crypté émis par la carte actionnée par l'abonné,
- des moyens logiciels d'édition 21b d'un accusé de réception des ordres donnés destiné à être adressé à l'abonné.

Grâce à ce système, l'abonné a validé, par une signature électronique, l'ordre qu'il a donné au prestataire de service.

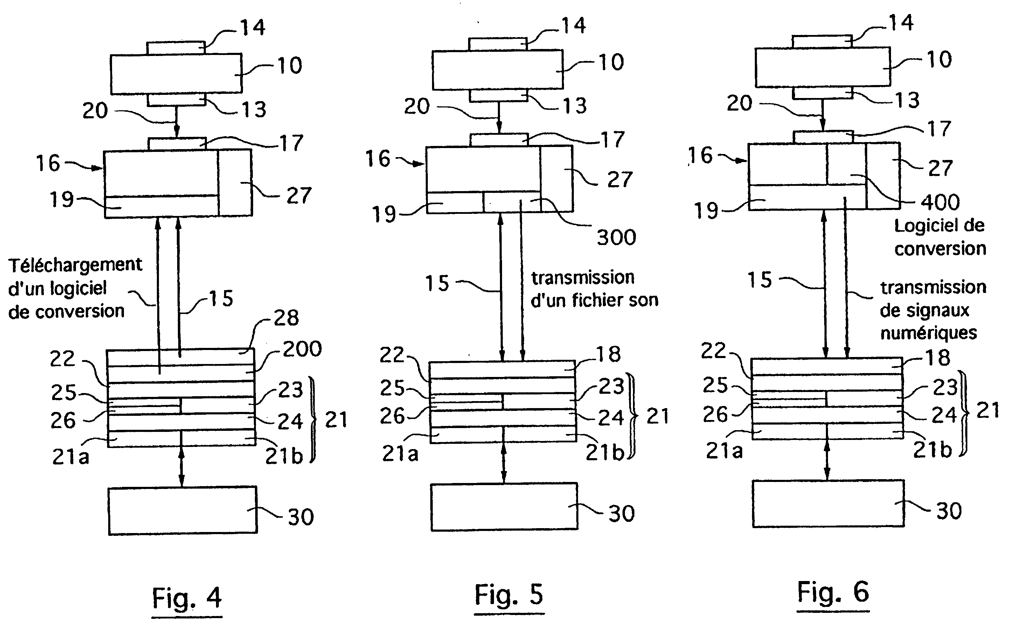

En se référant aux figures 4, 5 et 6, on va maintenant décrire trois variantes de réalisation qui permettent de transmettre les signaux acoustiques d'identification 20 au service informatique 18 du prestataire de service 12. On a utilisé les mêmes références sur ces figures pour désigner les organes et les moyens qui ont été décrits en rapport avec la figure 1.

Selon la première variante de réalisation (figure 4), les moyens informatiques 21, dépendants des services informatiques 18 du prestataire de service, comprennent des moyens de téléchargement 200 dans le terminal multimédia 16, d'un logiciel de conversion du fichier son en bits. De sorte que les signaux provenant du terminal multimédia 16 se présentent sous la forme d'une séquence de bits.

Selon la deuxième variante (figure 5), le terminal multimédia 16 comprend des moyens de conversion et de transmission 300 des signaux acoustiques d'identification reçus par le microphone du terminal multimédia, sous la forme d'un fichier son. Ce fichier son est transmis notamment après réception d'un signal émis par les services informatiques 18 du prestataire de service. Ce signal est émis après que la connexion téléphonique ait été établie entre le terminal et le service informatique. Dans le cas de cette variante le traitement du fichier son et sa transformation en une séquence de bits sont effectués par les moyens informatiques 21 des services informatiques 18 du prestataire de service.

Selon la troisième variante (figure 6), le prestataire de service fournit à l'abonné un logiciel de conversion (400) que celui-ci entre dans son terminal multimédia 16. Ce logiciel de conversion transforme les signaux acoustiques reçus et transmis par le microphone 17 du terminal multimédia 16, en des signaux numériques transmissibles à distance au moyen du réseau informatique du type Internet 15.

## Revendications

1. Procédé permettant aux utilisateurs (11) d'un réseau informatique du type Internet, disposant de terminaux multimédia (16) comportant un microphone (17) et connectés au réseau informatique (15) du type Internet, situés à distance d'un prestataire de service (12), d'accéder de manière sûre et rapide, aux services (30) que ce prestataire de service (12) offre aux utilisateurs (11) du réseau informatique du type Internet, le dit procédé comprenant les étapes suivantes :
- le prestataire de service (12) met à la disposition de chacun des utilisateurs (11) du réseau informatique du type Internet qui se sont abonnés à ses services une carte (10), au format carte de crédit, personnalisée par des identifiants spécifiques pour chaque abonné et pour chaque carte, la dite carte (10), au format carte de crédit, émet de brefs signaux acoustiques d'identification (20), de type DTMF, cryptés au moins en partie, variant à chaque opération, lorsqu'elle est actionnée (14) par l'utilisateur (11) du réseau informatique du type Internet,
- les dits signaux acoustiques d'identification (20) sont reçus par le microphone (17) du terminal multimédia (16) et transmis via le réseau informatique (15) du type Internet au service informatique (18) du prestataire de service,
- les signaux transmis et les données d'identification de l'abonné et de la carte détenues (23) par le service informatique (18), sont traités (24) et comparés (25) électroniquement par le service informatique (18) du prestataire de service,
de sorte qu'en cas de coïncidence, l'abonné (11) peut être immédiatement mis en communication avec les services (30) du prestataire de service (12).

2. Procédé selon la revendication 1,
- la dite carte (10) :
* décompte (105) en outre le nombre de fois C(p,n) (242) où elle est actionnée par l'élément (14),
* émet des signaux acoustiques (20) représentatifs du nombre de fois C(p,n) (242) où elle a été actionnée,
* crypte (103) les signaux acoustiques en fonction du nombre de fois C(p,n) (242) où elle a été actionnée,
- les moyens informatiques (21) du service informatique (18) traitant (24) et comparant (25) électroniquement les signaux transmis et les données d'identification du client et de la carte détenues (23) par le service informatique (18) du prestataire de service :
* mémorisent (23) le nombre de fois C(p,m) (246) où la carte a été actionnée lors de dernière opération validée,
* comparent (245) le nombre de fois C(p,n) (242) où la carte a été actionnée, lors de l'opération en cours, avec le nombre de fois mémorisé C(p,m) (246),
* rejettent l'opération en cours si C(p,n) (242) est inférieur ou égal à C(p,m) (246) et poursuivent la vérification de l'opération en cours si C(p,n) (242) est supérieur à C(p,m) (246),
* recalculent (247) les signaux électroniques S'(p,n) (248) en fonction des données d'identification et du nombre de fois C(p,n) (242) où la carte a été actionnée, lors de l'opération en cours, puis les comparent (249) aux signaux électroniques transmis S(p,n) (241).
de sorte qu'en cas de coïncidence, l'abonné (11) peut être immédiatement mis en communication avec les services (30) du prestataire de service (12).

3. Procédé selon les revendications 1 ou 2, comprenant en outre l'étape suivante :
- l'abonné (11) émet, au moyen d'un clavier (27) associé au terminal multimédia (16) et/ou à la carte (10), un code confidentiel, après transmission au service informatique (18) du prestataire de service (12), via le réseau informatique (15) du type Internet, ce code confidentiel est traité et comparé au code confidentiel personnel de l'abonné détenu (23) par le service informatique (18) du prestataire de service (12).

4. Procédé selon les revendications 1, 2 ou 3, comprenant en outre l'étape suivante :
- les ordres donnés par l'abonné (11) aux services (30) du prestataire de service (12) sont validés par l'abonné en actionnant la carte (10) pour qu'elle émette un signal acoustique crypté de validation,
- le dit signal de validation est enregistré par le service informatique (18) du prestataire de service (12),
de sorte que l'abonné (11) a validé, par une signature électronique, l'ordre qu'il a donné au prestataire de service (12).

5. Procédé selon les revendications 1, 2, 3 ou 4, comprenant en outre les étapes suivantes :
- les signaux acoustiques d'identification (20), reçus par le microphone (17) du terminal multimédia (16) et transmis via le réseau informatique (15) du type Internet au service informatique (18) du prestataire de service (12), sont transmis sous la forme d'un fichier son.

6. Procédé selon les revendications 1, 2, 3 ou 4, comprenant en outre les étapes suivantes :
- le service informatique (18) du prestataire de service (12) télécharge dans le terminal multimédia un logiciel de conversion,
- le logiciel de conversion convertit sous la forme d'une séquence de bits les signaux acoustiques d'identification (20) reçus par le microphone (17) du terminal multimédia (16),
- la séquence de bits est transmise, via le réseau informatique (15) du type Internet, au service informatique (18) du prestataire de service (12), de sorte que les signaux provenant du terminal multimédia se présentent sous la forme d'une séquence de bits.

7. Procédé selon les revendications 1, 2, 3 ou 4, comprenant en outre les étapes suivantes :
- le prestataire de service (12) met à la disposition de chacun des utilisateurs (11) du réseau informatique (15) du type Internet qui se sont abonnés à ses services (30), un logiciel de conversion destiné à être mis en oeuvre dans le terminal multimédia (16),
- les dits signaux acoustiques d'identification (20) reçus par le microphone (17) du terminal multimédia (16) sont convertis en séquence de bits, avant d'être transmis via le réseau informatique (15) du type Internet au service informatique (18) du prestataire de service.

8. Système permettant aux utilisateurs du réseau informatique (15) du type Internet disposant de terminaux multimédia (16) comportant un microphone (17), connectés au réseau informatique du type Internet, situés à distance d'un prestataire de service (12), d'accéder de manière sûre et rapide, aux services (30) que le dit prestataire de service (12) offre aux utilisateurs abonnés (11), le dit système comprenant :
- une carte (10), au format carte de crédit, personnalisée par des identifiants spécifiques pour chaque carte et pour chaque abonné, mise à la disposition de ceux-ci, la dite carte (10) comportant :
* des moyens d'émission (13) de brefs signaux d'identification (20), de type DTMF, actionnés par l'abonné au moyen d'un élément (14) accessible de l'extérieur de la carte (10),
* des moyens de cryptage (103) permettant de crypter au moins en partie et de varier les signaux acoustiques (20) chaque fois que la carte (10) est actionnée (14),
- des moyens de transmission (19) des signaux acoustiques (20), situés dans les terminaux multimédia (16), transmettant à distance sous la forme de signaux électroniques, via le réseau informatique (15) du type Internet, les dits signaux acoustiques (20),
- des moyens informatiques (21), dépendants des services informatiques (18) du prestataire de service (12), connectés au réseau informatique (15) du type Internet et recevant les signaux provenant des terminaux multimédia (16), les dits moyens informatiques (21)comprenant :
* une base de données (23) contenant les références des cartes (10) et des abonnés (11) et leurs données d'idcntification,
* des moyens de traitement (24) et des moyens de comparaison (25) des signaux électroniques et des données d'identification contenues dans la base de données (23), de sorte qu'en cas de coïncidence les services (30) du prestataire de service (12) sont immédiatement accessibles aux abonnés (11).

9. Système selon la revendication 8,
- la dite carte (10) comportant en outre :
* un compteur incrémental (105) interconnecté aux moyens d'émission (13) et aux moyens de cryptage (103), s'incrémentant d'au moins une unité chaque fois que la carte (10) est actionnée par l'élément (14),
de sorte que l'état du compteur incrémental (105) est émis à destination des moyens informatiques (21) et que les signaux acoustiques sont cryptés en fonction de l'état du compteur incrémental,
- les dits moyens informatiques (21) comportant en outre :
* des moyens de mémorisation (23) de l'état C(p,m) (246) du compteur incrémental (105) lors de la dernière opération validée,
* des moyens de comparaison (245) de l'état C(p,n) (242) du compteur incrémental (105) émis lors de l'opération en cours avec l'état C(p,m) (246) du compteur incrémental mémorisé,
de sorte que la vérification de l'opération en cours est rejetée si C(p,n) (242) est inférieur ou égal à C(p,m) (246) et est poursuivie si C(p,n) (242) est strictement supérieur à C(p,m) (246),
- les dits moyens de traitement (24) et les dits moyens de comparaison (25) des signaux électroniques et des données d'identification contenues dans la base de données comportant des moyens permettant de recalculer (247) les signaux électroniques en fonction de l'état C(p,n) (242) du compteur incrémental (105) et des données d'identification puis de les comparer (249) aux signaux électroniques transmis,
de sorte qu'en cas de coïncidence les services (30) du prestataire de service (12) sont immédiatement accessibles aux abonnés (11).

10. Système selon les revendications 8 ou 9, les dits moyens informatiques (21) comprenant en outre:
- des seconds moyens de comparaison (26) d'un code confidentiel personnel à l'abonné contenu dans la base de données (23), à un code confidentiel émis par l'abonné au moyen d'un clavier (27) associé au terminal multimédia (16) et/ou à la carte (10) et transmis aux moyens informatiques (21) du prestataire de service (12), par le réseau informatique de communication (15).

11. Système selon les revendications 8, 9, ou 10, les dits moyens informatiques (21) comprenant en outre :
- des moyens logiciels de validation (21a) des ordres donnés par l'abonné (11) au prestataire de service (12), après détection d'un signal acoustique crypté émis par la carte (10) actionnée par l'abonné,
- des moyens logiciels d'édition (21b) d'un accusé de réception des ordres donnés destiné à être adressé à l'abonné.

12. Système selon les revendications 8, 9, 10 ou 11,
- le terminal multimédia comprenant des moyens de transmission (300) des signaux acoustiques d'identification (20) reçus par le microphone (17) du terminal multimédia (16), sous la forme d'un fichier son, via le réseau informatique (15) du type Internet, vers le service informatique (18) du prestataire de service (12).

13. Système selon les revendication 8, 9, 10 ou 11:
- les moyens informatiques (21), dépendants des services informatiques (18) du prestataire de service (12), comprenant :
* des moyens de téléchargement (200) d'un logiciel de conversion dans le terminal multimédia (16), le dit logiciel de conversion convertissant, sous la forme d'une séquence de bits, les signaux acoustiques d'identification (20) reçus par le microphone (17) du terminal multimédia (16),
* des moyens d'émission d'un ordre de transmission de la séquence de bits, du terminal multimédia (16) vers les services informatiques (18) du prestataire de service, via le réseau informatique (15) du type Internet,
de sorte que les signaux provenant du terminal multimédia se présentent sous la forme d'une séquence de bits.

14. Système selon les revendications 8, 9, 10 ou 11, comprenant :
- un logiciel de conversion destiné à être mis en oeuvre dans le terminal multimédia (16), le dit logiciel de conversion transformant les signaux acoustiques (20) reçus et transmis par le microphone (17) du terminal multimédia, en des signaux numériques transmissibles à distance via le réseau informatique (15) du type Internet.

## Patentansprüche

1. Verfahren, das den Benutzern (11) eines Computernetzes vom Internet-Typ, ausgestattet mit Multimedia-Terminals (16), die ein Mikrophon (17) umfassen und an das Computernetz (15) vom Internet-Typ angeschlossen sind und sich in Entfernung von einem Dienstleistungsanbieter bzw. Service Provider (12) befinden, den sicheren und schnellen Zugang zu den Dienstleistungen (30) ermöglicht, die der Dienstleistungsanbieter bzw. Service Provider (12) den Benutzern (11) des Computernetzes vom Internet-Typ bietet, wobei das Verfahren die folgenden Schritte umfasst:
- der Dienstleistungsanbieter bzw. Service Provider (12) stellt jedem Benutzer (11) des Computernetzes vom Internet-Typ, die Abonnenten seiner Dienstleistungen sind, eine Karte (10) zur Verfügung, die das Format einer Kreditkarte aufweist und durch für jeden Abonnenten und jede Karte spezifische ldentifikationsdaten personalisiert ist, wobei jede dieser Karten (10) kurze akustische ldentifizierungssignale (20) vom Typ DTMF sendet, die zumindest teilweise verschlüsselt sind und sich bei jeder Betätigung (14) der Karte durch den Benutzer (11) des Computernetzes vom Internet-Typ ändern,
- die erwähnten akustischen ldentifizierungssignale (20) werden vom Mikrophon (17) des Multimedia-Terminals (16) empfangen und über das Computernetz (15) vom Internet-Typ an die Computerzentrale (18) des Dienstleistungsanbieters bzw. Service Providers übertragen,
- die übertragenen Signale und die Identifizierungsdaten des Abonnenten und der Karte, die in der Computerzentrale (18) gespeichert sind (23), werden von der Computerzentrale (18) des Dienstleistungsanbieters bzw. Service Providers (12) elektronisch verarbeitet (24) und verglichen (25), so dass bei Übereinstimmung der Daten, der Abonnent (11) sofort Zugang zu den Dienstleistungen (30) des Dienstleistungsanbieters bzw. Service Providers (12) erhält.

2. Verfahren nach Anspruch 1,
- wobei die Karte (10):
* ferner die Zahl C(p, n) (242) ihrer Betätigungen durch das Element (14) berechnet (105),
* akustische Signale (20) sendet, die für die Zahl C(p, n) (242) ihrer Betätigungen repräsentativ sind,
* die akustischen Signale als Funktion der Zahl C(p, n) (242) ihrer Betätigungen verschlüsselt (103),
- wobei die EDV-Verarbeitungsmittel (21) der Computerzentrale (18), welche die übertragenen Signale und die ldentifizierungsdaten des Kunden und der Karte, die in der Computerzentrale (18) des Dienstleistungsanbieters bzw. Service Providers gespeichert sind (23), elektronisch verarbeiten (24) und vergleichen (25):
* die Zahl C(p, m) (246) der Betätigungen der Karte während der letzten validierten Transaktionen speichern (23),
* die Zahl C(p, n) (242) der Betätigungen der Karte während der laufenden Transaktion mit der gespeicherten Zahl von Betätigungen C(p, m) (246) vergleichen (245),
* die laufende Transaktion abbrechen, wenn C(p, n) (242) kleiner oder gleich C(p, m) (246) ist und die Prüfung der laufenden Transaktion fortsetzen, wenn C(p, n) (242) größer als C(p, m) (246) ist,
* die elektronischen Signale S'(p, n)(248) als Funktion der Identifizierungsdaten und der Zahl der Betätigungen der Karte C(p, n) (242) im Verlauf der laufenden Transaktion neu berechnen (247) und sie dann mit den übertragenen elektronischen Signalen S(p, n) (241) vergleichen (249),
so dass bei Übereinstimmung, der Abonnent (11) sofort Zugang zu den Dienstleistungen (30) des Dienstleistungsanbieters bzw. Service Providers (12) erhält.

3. Verfahren nach einem der Ansprüche 1 oder 2, das ferner den folgenden Schritt umfasst:
- der Abonnent (11) sendet mittels einer dem Multimedia-Terminal (16) und/oder der Karte (10) zugeordneten Tastatur (27) einen vertraulichen Code, wobei nach Übertragung an die Computerzentrale (18) des Dienstleistungsanbieters bzw. Service Providers (12) über das Computernetz (15) vom Internet-Typ, dieser vertrauliche Code verarbeitet und mit dem in der Computerzentrale (18) des Dienstleistungsanbieters bzw. Service Providers (12) gespeicherten (23) persönlichen vertraulichen Code des Abonnenten verglichen wird.

4. Verfahren nach einem der Ansprüche 1, 2 oder 3, das ferner den folgenden Schritt umfasst:
- die vom Abonnenten (11) an die Dienstleistungen (30) des Dienstleistungsanbieters bzw. Service Providers (12) erteilten Anweisungen werden vom Abonnenten durch Betätigung der Karte (10) validiert, um sicherzustellen, dass ein verschlüsseltes akustisches Validierungssignal von der Karte gesendet wird,
- das Validierungssignal wird von der Computerzentrale (18) des Dienstleistungsanbieters bzw. Service Providers (12) aufgezeichnet,
so dass der Abonnent (11) die an den Dienstleistungsanbieter bzw. Service Provider (12) erteilte Anweisung durch eine elektronische Unterschrift validiert.

5. Verfahren nach einem der Ansprüche 1, 2, 3 oder 4, das ferner die folgenden Schritte umfasst:
- die vom Mikrophon (17) des Multimedia-Terminals (16) aufgenommenen und über das Computernetz (15) vom Internet-Typ an die Computerzentrale (18) des Dienstleistungsanbieters bzw. Service Providers (12) gesendeten akustischen Identifizierungssignale (20) werden in der Form einer Schalldatei gesendet.

6. Verfahren nach einem der Ansprüche 1, 2, 3 oder 4, das ferner die folgenden Schritte umfasst:
- die Computerzentrale (18) des Dienstleistungsanbieters bzw. Service Providers (12) lädt eine Konversionssoftware in das Multimedia-Terminal herunter,
- die Konversionssoftware konvertiert die vom Mikrophon (17) des Multimedia-Terminals (16) aufgenommenen akustischen ldentifizierungssignale (20) in eine Bitfolge,
- diese Bitfolge wird über das Computernetz (15) vom Internet-Typ an die Computerzentrale (18) des Dienstleistungsanbieters bzw. Service Providers (12) gesendet,
so dass die vom Multimedia-Terminal kommenden Signale als Bitfolge eintreffen.

7. Verfahren nach einem der Ansprüche 1, 2, 3 oder 4, das ferner die folgenden Schritte umfasst:
- der Dienstleistungsanbieter bzw. Service Provider (12) stellt jeden Benutzer (11) des Computernetzes (15) vom Internet-Typ, der Abonnent seiner Dienstleistungen (30) ist, eine Konversionssoftware zur Verfügung, die im Multimedia-Terminal (16) zur Anwendung kommen soll,
- die vom Mikrophon (17) des Multimedia-Terminals (16) aufgenommenen akustischen ldentifizierungssignale (20) werden in eine Bitfolge konvertiert bevor sie über das Computernetz (15) vom Internet-Typ an die Computerzentrale (18) des Dienstleistungsanbieters bzw. Service Providers gesendet werden.

8. System, das den Benutzern des Computernetzes (15) vom Internet-Typ, die über Multimedia-Terminals (16) verfügen, welche ein Mikrophon (17) umfassen und an das Computernetz (15) vom Internet-Typ angeschlossen sind und sich in Entfernung von einem Dienstleistungsanbieter bzw. Service Provider (12) befinden, schnellen und sicheren Zugang zu den Dienstleistungen (30) gewährt, die der Dienstleistungsanbieter bzw. Service Provider (12) seinen Abonnenten (11) bietet, wobei das System folgendes umfasst:
- eine Karte (10) im Kreditkartenformat, die durch für jede Karte und für jeden Abonnenten spezifische Identifizierungsdaten personalisiert und die dem Abonnenten zur Verfügung gestellt wird, wobei die Karte (10) folgendes umfasst:
* Mittel zum Senden (13) kurzer Identifizierungssignale (20) des Typs DTMF, die vom Abonnenten mittels eines Elementes (14) betätigt werden, das von außerhalb der Karte (10) zugänglich ist,
* Verschlüsselungsmittel (103), die das Verschlüsseln von mindestens einem Teil und das Variieren der akustischen Signale (20) bei jeder Betätigung (14) der Karte (10) ermöglichen,
- in den Multimedia-Terminals (16) untergebrachte Übertragungsmittel (19) der akustischen Signale (20), welche diese akustischen Signale (20) über das Computernetz (15) vom Internet-Typ in die Ferne senden können,
- EDV-Verarbeitungsmittel (21), die von der Computerzentrale (18) des Dienstleistungsanbieters bzw. Service Providers (12) abhängig sind, an das Computernetz (15) vom Internet-Typ angeschlossen sind und die von den Multimedia-Terminals (16) kommenden Signale empfangen, wobei diese EDV-Verarbeitungsmittel (21) folgendes umfassen:
* eine Datenbank (23), in der die Referenzdaten der Karten (10) der Abonnenten (11) sowie deren Identifizierungsdaten gespeichert sind,
* Mittel zum Verarbeiten (24) und zum Vergleichen (25) der elektronischen Signale mit den in der Datenbank (23) gespeicherten ldentifizierungsdaten,
so dass bei Übereinstimmung, der Abonnent (11) sofort Zugang zu den Dienstleitungen (30) des Dienstleistungsanbieters bzw. Service Providers (12) erhält.

9. System nach Anspruch 8,
- wobei die Karte (10) ferner folgendes umfasst:
* einen Schrittzähler (105), der mit den Sendemitteln (13) und mit den Verschlüsselungsmitteln (103) verbunden ist und bei jeder Betätigung der Karte (10) mit Hilfe des Elementes (14) um mindestens eine Einheit weitergestellt wird,
so dass der Zustand des Schrittzählers (105) an die EDV-Verarbeitungsmittel (21) weitergeleitet wird und, dass die akustischen Signale als Funktion des Status des Schrittzählers verschlüsselt werden,
- wobei die EDV-Verarbeitungsmittel (21) ferner folgendes umfassen:
* Mittel zum Speichern (23) des Status C(p, m) (246) des Schrittzählers (105) bei der letzten validierten Transaktion,
* Mittel zum Vergleichen (25) des Status C(p, n) (242) des Schrittzählers (105), die bei der laufenden Transaktion herausgegeben wurden, mit dem gespeicherten Status C(p, m) (246) des Schrittzählers (105),
so dass die Prüfung der laufenden Transaktion abgebrochen wird, wenn C(p, n) (242) kleiner oder gleich C(p, m) (246) ist und weitergeführt wird, wenn C(p, n) (242) streng größer als C(p, m) (246) ist,
- wobei die Mittel zum Verarbeiten (24) und zum Vergleichen (25) der elektronischen Signale mit den in der Datenbank gespeicherten ldentifizierungsdaten über Mittel verfügen, mit denen die elektronischen Signale als Funktion des Status C(p, n) (242) des Schrittzählers (105) und der ldentifizierungsdaten neu berechnet werden können (247) und dann mit den gesendeten elektronischen Signalen verglichen werden (249),
so dass bei Übereinstimmung, der Abonnent (11) sofort Zugang zu den Dienstleitungen (30) des Dienstleistungsanbieters bzw. Service Providers (12) erhält.

10. System nach einem der Ansprüche 8 oder 9, wobei die EDV-Verarbeitungsmittel (21) ferner folgendes umfassen:
- zweite Vergleichsmittel (26) eines in der Datenbank (23) gespeicherten vertraulichen, für den Abonnenten persönlichen Codes, mit einem vom Abonnenten mittels einer mit dem Multimedia-Terminal (16) und/oder mit der Karte (10) assoziierten Tastatur (27) gesendeten vertraulichen Code, welcher an die EDV-Verarbeitungsmittel (21) des Dienstleistungsanbieters bzw. Service Providers (12) über das Computernetz (15) vom Internet-Typ gesendet wird.

11. System nach einem der Ansprüche 8, 9 oder 10, wobei die EDV-Verarbeitungsmittel (21) ferner folgendes umfassen:
- eine Validierungssoftware (21a) der vom Abonnenten (11) an den Dienstleistungsanbieter bzw. Service Provider (12) erteilten Anweisungen, nach Erfassung eines von der vom Abonnenten betätigten Karte (10) abgegebenen verschlüsselten akustischen Signals,
- eine Software (21b) zum Ausstellen einer Empfangsbestätigung der erteilten Anweisungen, die dem Abonnenten zugesandt wird.

12. System nach einem der Ansprüche 8, 9, 10 oder 11,
- wobei das Multimedia-Terminal über Mittel zum Senden (300) der vom Mikrophon (17) des Multimedia-Terminals (16) aufgenommenen akustischen ldentifizierungssignale (20) in Form einer akustischen Datei über das Computernetz (15) vom Internet-Typ an die Computerzentrale (18) des Dienstleistungsanbieters bzw. Service Providers (12) verfügt.

13. System nach einem der Ansprüche 8, 9, 10 oder 11,
- wobei die von der Computerzentrale (18) des Dienstleistungsanbieters bzw. Service Providers (12) abhängingen EDV-Verarbeitungsmittel (21) folgendes umfassen:
* Mittel zum Aufladen (200) einer Konversionssoftware in das Multimedia-Terminal (16), wobei diese Software die vom Mikrophon (17) des Multimedia-Terminals (16) aufgenommenen akustischen Identifizierungssignale (20) in eine Bitfolge umwandelt,
* Mittel zum Herausgeben eines Sendebefehls für die Bitfolge vom Multimedia-Terminal (16) zur Computerzentrale (18) des Dienstleistungsanbieters bzw. Service Providers, über das Computernetz (15) vom Internet-Typ,
so dass die vom Multimedia-Terminal kommenden Signale als Bitfolge auftreten.

14. System nach einem der Ansprüche 8,9,10 oder 11, das folgendes umfasst:
- eine Konversionssoftware, die im Multimedia-Terminal (16) zum Einsatz kommen soll,
wobei diese Software die vom Mikrophon (17) des Multimedia-Terminals aufgenommenen und gesendeten akustischen Signale (20) in digitale Signale umwandelt, die in die Ferne über das Computernetz (15) vom Internet-Typ gesendet werden können.

## Claims

1. Process enabling the users (11) of an Internet-like computer network, having multimedia terminals (16) comprising a microphone (17) and connected to the Internet-like computer network (15), located at a distance from a service provider (12), to access securely and rapidly the services (30) that this service provider (12) offers to the users (11) of the Internet-like computer network, the said process comprising the following steps:
- the service provider (12) makes available to each of the users (11) of the Internet-like computer network who have subscribed to his services a card (10), in credit card format, customized with specific identifiers for each subscriber and for each card, the said card (10), in credit card format, sends short audio identification signals (20) of the DTMF type, at least partially encrypted, varying with each transaction, when it is activated (14) by the user (11) of the Internet-like computer network,
- the said audio identification signals (20) are received by the microphone (17) of the multimedia terminal (16) and are transmitted via the Internet-like computer network (15) to the computer facility (18) of the service provider,
- the signals transmitted and the identification data of the subscriber and of the card held (23) by the computer facility (18) are processed (24) and compared (25) electronically by the computer facility (18) of the service provider, so that, if there is a match, the subscriber (11) can be immediately put through to the services (30) of the service provider (12) .

2. Process according to Claim 1,
- the said card (10):
* additionally counts (105) the number of times C(p,n) (242) it is activated by the element (14),
* sends audio signals (20) representing the number of times C(p,n) (242) it has been activated,
* encrypts (103) the audio signals according to the number of times C(p,n) (242) it has been activated.
- the computer means (21) of the computer facility (18) which electronically process (24) and compare (25) the signals transmitted and the identification data of the customer and of the card held (23) by the computer facility (18) of the service provider:
* store (23) the number of times C(p,m) (246) the card has been activated during the last validated transaction,
* compare (245) the number of times C(p,n) (242) the card has been activated during the current transaction with the stored number of times C(p,m) (246),
* reject the current transaction if C(p,n) (242) is less than or equal to C(p,m) (246) and continue with the verification of the current transaction if C(p,n) (242) is greater than C(p,m) (246),
* recalculate (247) the electronic signals S'(p,n) (248) according to the identification data and the number of times C(p,n) (242) the card has been activated during the current transaction, then compare them (249) with the electronic signals S(p,n) (241) transmitted, so that, if there is a match, the subscriber (11) can be immediately put through to the services (30) of the service provider (12).

3. Process according to Claims 1 or 2, additionally comprising the following step:
- the subscriber (11) sends, by means of a keyboard (27) associated with the multimedia terminal (16) and/or with the card (10), a confidential code, after transmission to the computer facility (18) of the service provider (12), via the Internet-like computer network (15), this confidential code is processed and compared with the subscriber's personal confidential code held (23) by the computer facility (18) of the service provider (12).

4. Process according to Claims 1, 2 or 3, additionally comprising the following step:
- the orders issued by the subscriber (11) to the services (30) of the service provider (12) are validated by the subscriber by activation of the card (10) so that it sends an encrypted audio validation signal,
- the said validation signal is recorded by the computer facility (18) of the service provider (12), so that the subscriber (11) has validated, with an electronic signature, the order which he issued to the service provider (12).

5. Process according to Claims 1, 2, 3 or 4, additionally comprising the following steps:
- the audio identification signals (20), received by the microphone (17) of the multimedia terminal (16) and transmitted via the Internet-like computer network (15) to the computer facility (18) of the service provider (12), are transmitted in the form of a sound file.

6. Process according to Claims 1, 2, 3 or 4, additionally comprising the following steps:
- the computer facility (18) of the service provider (12) downloads conversion software to the multimedia terminal,
- the conversion software converts into a bit sequence the audio identification signals (20) received by the microphone (17) of the multimedia terminal (16),
- the bit sequence is transmitted, via the Internet-like computer network (15), to the computer facility (18) of the service provider (12),
so that the signals from the multimedia terminal appear in the form of a bit sequence.

7. Process according to Claims 1, 2, 3 or 4, additionally comprising the following steps:
- the service provider (12) makes available to each of the users (11) of the Internet-like computer network (15) who subscribe to his services (30) conversion software to be implemented in the multimedia terminal (16),
- the said audio identification signals (20) received by the microphone (17) of the multimedia terminal (16) are converted into bit sequences before being transmitted via the Internet-like computer network (15) to the computer facility (18) of the service provider.

8. System enabling the users of the Internet-like computer network (15) having multimedia terminals (16) comprising a microphone (17) and connected to the Internet-like computer network, and located at a distance from a service provider (12), to access securely and rapidly the services (30) that the said service provider (12) offers to the subscribed users (11), the said system comprising:
- a card (10), in credit card format, customized with specific identifiers for each card and for each subscriber, made available to the subscribers, the said card (10) comprising:
* means (13) of sending short audio identification signals (20) of the DTMF type, activated by the subscriber by means of an element (14) accessible from the outside of the card (10),
* encryption means (103) for encrypting at least partially and varying the audio signals (20) whenever the card (10) is activated (14),
- means (19) for transmitting the audio signals (20), located in the multimedia terminals (16), remotely transmitting the said audio signals (20) in the form of electronic signals via the Internet-like computer network (15),
- computer means (21), depending on the computer facilities (18) of the service provider (12), connected to the Internet-like computer network (15) and receiving the signals from the multimedia terminals (16), the said computer means (21) comprising:
* a database (23) containing the references of the cards (10) and of the subscribers (11) and their identification data,
* means of processing (24) and means of comparing (25) the electronic signals and the identification data contained in the database (23),
so that, if there is a match, the services (30) of the service provider (12) are immediately accessible to the subscribers (11).

9. System according to Claim 8,
- the said card (10) additionally comprising:
* an incremental counter (105) interconnected with the sending means (13) and the encryption means (103), and incremented by at least one unit whenever the card (10) is activated by the element (14),
so that the state of the incremental counter (105) is sent to the computer means (21) and the audio signals are encrypted according to the state of the incremental counter,
- the said computer means (21) additionally comprising:
* means (23) for storing the state C(p,m) (246) of the incremental counter (105) during the last validated operation,
* means for comparing (245) the state C(p,n) (242) of the incremental counter (105) sent during the current operation with the stored state C(p,m) (246) of the incremental counter,
so that the verification of the current transaction is rejected if C(p,n) (242) is less than or equal to C(p,m) (246) and is continued if C(p,n) (242) is strictly greater than (p,m) (246),
- the said means of processing (24) and the said means of comparing (25) the electronic signals and the identification data contained in the database comprising means for recalculating (247) the electronic signals according to the state C(p,n) (242) of the incremental counter (105) and the identification data and then for comparing them (249) with the electronic signals transmitted,
so that, if there is a match, the services (30) of the service provider (12) are immediately accessible to the subscribers (11).

10. System according to Claims 8 or 9, the said computer means (21) additionally comprising:
- second means of comparing (26) a confidential personal code of the subscriber contained in the database (23) with a confidential code sent by the subscriber by means of a keyboard (27) associated with the multimedia terminal (16) and/or with the card (10) and transmitted to the computer means (21) of the service provider (12) via the computer communication network (15).

11. System according to Claims 8, 9 or 10, the said computer means (21) additionally comprising:
- software means for validating (21a) the orders issued by the subscriber (11) to the service provider (12), after detection of an encrypted audio signal sent by the card (10) activated by the subscriber,
- software means for printing (21b) an acknowledgement of receipt of the issued orders, to be sent to the subscriber.

12. System according to Claims 8, 9, 10 or 11,
- the multimedia terminal comprising means of transmitting (300) the audio identification signals (20) received by the microphone (17) of the multimedia terminal (16), in the form of a sound file, via the Internet-like computer network (15), to the computer facility (18) of the service provider (12).

13. System according to Claims 8, 9, 10 or 11,
- the computer means (21), depending on the computer facilities (18) of the service provider (12), comprising:
* means of downloading (200) conversion software to the multimedia terminal (16), the said conversion software converting into a bit sequence the audio identification signals (20) received by the microphone (17) of the multimedia terminal (16),
* means of sending an order for the transmission of the bit sequence from the multimedia terminal (16) to the computer facilities (18) of the service provider, via the Internet-like computer network (15),
so that the signals from the multimedia terminal appear in the form of a bit sequence.

14. System according to Claims 8, 9, 10 or 11, comprising:
- conversion software to be implemented in the multimedia terminal (16), the said conversion software converting the audio signals (20) received and transmitted by the microphone (17) of the multimedia terminal into digital signals which can be remotely transmitted via the Internet-like computer network (15).
